# DEMANDE DE BREVET EUROPEEN

(11) **EP 2 334 007 A1**
(43) Date de publication de la demande: **15.06.2011**
(21) Numéro de dépôt: 10193912.2
(22) Date de dépôt: 07.12.2010
(51) Int. Cl.: H04L 9/08, H04N 7/167

(54) **Procédé de déchiffrement de données par un équipement utilisateur comportant un terminal et un module de sécurité**

(30) Priorité: 08.12.2009 FR 0958748
(71) Demandeur: France Telecom, 75015 Paris (FR)
(72) Inventeur: Fontaine, Noël, 35590, SAINT-GILLES (FR); Guionnet, Chantal, 35510, CESSON SEVIGNE (FR)

(57) **Abrégé**

Le terminal (20) reçoit (E0) un premier message de contrôle d'accès (ECM1-nA) contenant une première clé (CW1-nA) sous forme chiffrée et une pluralité de deuxièmes messages de contrôle d'accès (ECM2-mA) contenant respectivement une pluralité de deuxièmes clés (CW2-mA) sous forme chiffrée. Il retransmet ledit premier message de contrôle d'accès (ECM1-nA) au module de sécurité (30). Celui-ci déchiffre (ES) la première clé (CW1-nA) présente dans le premier message de contrôle d'accès (ECM1-nA) puis la transmet au terminal (20). Pour chacun desdits deuxièmes messages (ECM2-mA), le terminal (20) déchiffre (E9) la deuxième clé (CW2-mA) présente dans ce deuxième message (ECM2-mA) à l'aide de la première clé reçue (CW1-nA) puis déchiffre (E10) lesdites données chiffrées à l'aide des dites deuxièmes clés.

## Description

L'invention se rapporte à l'accès à des données protégées transmises par un système de transmission à accès conditionnel. Les données protégées peuvent correspondre aux données d'un programme TV, d'un film, d'une vidéo, d'une musique, etc. Avec un système à accès conditionnel, l'accès aux données protégées est subordonné à la vérification d'un ou plusieurs critères: ceux-ci doivent être satisfaits par des droits d'utilisateur pour autoriser l'accès aux données et leur utilisation. De nombreux systèmes de télévision numérique ou de radio sont des systèmes à "accès conditionnel".

Ces systèmes de télévision numérique s'appuient sur la mise en oeuvre d'un ensemble de normes telles que celles définies par exemple par DVB (Digital Video Broadcasting, soit "diffusion vidéo numérique"). La protection de ces systèmes de télévision numérique repose sur des systèmes à "accès conditionnel" obéissant aux principes suivants :
- les données sont protégées par chiffrement à l'aide d'une clé secrète appelée "mot de contrôle" *(Control Word ou CW);*
- ce mot de contrôle, sous forme chiffrée, et le ou les critères d'accès au contenu sont transmis à un équipement récepteur d'utilisateur dans un message de contrôle d'accès appelé "ECM" *(Entitlement Control Message) ;*
- une clé d'exploitation K, apte à déchiffrer le mot de contrôle, ainsi que les informations nécessaires à la gestion des droits de l'utilisateur sont transmis à l'équipement récepteur, dans un message de gestion appelé *"EMM"(Entitlement Management Message).*

A titre d'exemples illustratifs, le ou les critères d'accès à un contenu peuvent comprendre un critère d'abonnement à la chaîne de télévision transmettant le programme, un critère d'âge (par exemple avoir plus de 18 ans), un critère de coût (l'accès au programme nécessitant par exemple un débit d'un nombre donné de jetons pré-payés d'un compte d'utilisateur), etc..

Un équipement récepteur comprend généralement un terminal de déchiffrement et de décodage, ou décodeur, et un module de sécurité, par exemple une carte à puce, connecté au décodeur. Le module de sécurité mémorise les droits de l'utilisateur. En fonctionnement, il déchiffre les mots de contrôle présents dans les messages ECM de contrôle d'accès reçus, après vérification du ou ces critères présents dans ces messages ECM, et fournit les mots de contrôle au décodeur. Le décodeur déchiffre ensuite les données de programme en utilisant les mots de contrôle fournis par le module de sécurité.

Un message de contrôle d'accès, ou ECM, est transmis de façon synchrone avec les données auxquelles il se rapporte, c'est-à-dire avec les données ayant été chiffrées avec le mot de contrôle présent dans cet ECM. Durant la transmission d'un programme audiovisuel par exemple, la valeur du mot de contrôle peut changer régulièrement, par exemple toutes les 10 secondes, pour des raisons de sécurité. Dans ce cas, une succession de messages de contrôle ECM distincts, véhiculant respectivement différents mots de contrôle, sont transmis durant le programme, de façon synchrone et concomitante à la transmission des données de programme correspondantes. En outre, un même message ECM peut être transmis plusieurs fois durant sa période de validité, afin de permettre un temps d'accès minimal en cas de zapping. A titre d'exemple illustratif, un même message ECM peut être répété toutes les 150 ms durant une période de validité de 10s.

Chaque nouveau message ECM reçu par le terminal est retransmis par celui-ci au module de sécurité pour traitement : le module de sécurité vérifie si le ou les critères contenu(s) dans le message ECM reçu sont satisfaits, déchiffre le mot de contrôle en cas de vérification positive puis transmet le mot de contrôle au terminal. Le terminal peut alors déchiffrer les données de programme correspondantes.

Ainsi, à chaque changement de mot de contrôle, autrement dit toutes les 10 secondes pour reprendre l'exemple précité, le module de sécurité reçoit et traite un message ECM contenant un nouveau mot de contrôle. Or, ces opérations de traitement des messages ECM par le module de sécurité sont consommatrices en temps. Cela n'est pas gênant lorsque le décodeur décode les données de programme à une vitesse normale. En revanche, lorsque l'utilisateur souhaite une commande d'avance rapide ou de retour rapide pour un programme audiovisuel en cours de visualisation, le temps de traitement des messages ECM successifs a pour effet de limiter la vitesse d'avance ou de retour rapide dans le programme.

L'invention vient améliorer la situation.

A cet effet, l'invention concerne un procédé de déchiffrement de données chiffrées par un équipement d'utilisateur comportant un terminal de déchiffrement connecté à un module de sécurité, dans lequel
- le terminal reçoit un premier message de contrôle d'accès contenant une première clé sous forme chiffrée et une pluralité de deuxièmes messages de contrôle d'accès contenant respectivement une pluralité de deuxièmes clés sous forme chiffrée;
- le terminal retransmet ledit premier message de contrôle d'accès au module de sécurité;
- le module de sécurité déchiffre la première clé présente dans le premier message de contrôle d'accès puis la transmet au terminal,
- pour chaque deuxième message reçu, le terminal déchiffre la deuxième clé présente dans ce deuxième message à l'aide de la première clé reçue,
- le terminal déchiffre lesdites données chiffrées à l'aide de la pluralité de deuxièmes clés reçues.

L'invention consiste à transmettre au terminal deux types de messages de contrôle d'accès : un premier message de contrôle d'accès (par exemple un premier ECM) destiné au module de sécurité et des deuxièmes messages de contrôle d'accès (par exemple des deuxièmes ECM) destinés spécifiquement et exclusivement au terminal. Le premier message contient une première clé que le module de sécurité déchiffre et fournit ensuite au terminal, comme dans le cas d'un traitement conventionnel de message ECM. Avec cette première clé, le terminal peut déchiffrer une pluralité de deuxièmes clés contenues dans une pluralité de deuxièmes messages reçus puis les données chiffrées, à l'aide de ces deuxièmes clés en clair. Les deuxièmes messages étant traités directement par le terminal, sans faire appel au module de sécurité, leur traitement est très rapide.

Avantageusement, le deuxième message de contrôle d'accès contenant au moins un critère d'accès aux données, le terminal vérifie ledit critère d'accès présent dans le deuxième message et ne déchiffre la deuxième clé que si le critère d'accès présent dans le deuxième message est satisfait.

Le premier message et les deuxièmes messages peuvent contenir des critères d'accès respectifs distincts. Le premier message peut par exemple contenir un ou plusieurs critères devant, par nature, être vérifiés par le module de sécurité (par exemple un critère d'abonnement). Les deuxièmes messages peuvent comprendre un ou plusieurs critères d'accès ne nécessitant pas une vérification par le module de sécurité (par exemple un critère de non appartenance à une liste noire de terminaux révoqués). Grâce à cela, le traitement des messages de contrôle d'accès est encore accéléré.

L'invention concerne aussi un procédé de transmission de données chiffrées par un système de transmission vers un équipement récepteur comportant un terminal de déchiffrement et un module de sécurité, dans lequel le système transmet au terminal lesdites données chiffrées, un premier message de contrôle d'accès contenant une première clé sous forme chiffrée et destiné à être retransmis au module de sécurité et une pluralité de deuxièmes messages de contrôle d'accès contenant respectivement une pluralité de deuxièmes clés sous forme chiffrée, la première clé étant chiffrée à l'aide d'une clé mémorisée par le module de sécurité et destinée à être déchiffrée par le module de sécurité et les deuxièmes clés étant chiffrées à l'aide de ladite première clé et destinées à être déchiffrées par le terminal.

L'invention concerne encore un terminal de déchiffrement de données chiffrées comprenant
- des premiers moyens de réception, adaptés pour recevoir un premier message de contrôle d'accès contenant une première clé sous forme chiffrée et un deuxième message de contrôle d'accès contenant une deuxième clé sous forme chiffrée
- des moyens pour retransmettre ledit premier message de contrôle d'accès à un module de sécurité externe, connecté au terminal, pour un déchiffrement de la première clé,
- des deuxièmes moyens de réception, adaptés pour recevoir la première clé, après déchiffrement par le module de sécurité, en provenance du module de sécurité,
- des premiers moyens de déchiffrement, adaptés pour déchiffrer la deuxième clé présente dans le deuxième message à l'aide de la première clé reçue,
- des deuxièmes moyens de déchiffrement, adaptés pour déchiffrer des données chiffrées à l'aide de la deuxième clé.

L'invention sera mieux comprise à l'aide de la description suivante de plusieurs modes de réalisation du procédé de déchiffrement de l'invention et du terminal associé, en référence aux dessins annexés sur lesquels :
- la figure 1 représente une vue schématique d'un système de transmission de données et d'un équipement récepteur;
- la figure 2 représente un organigramme des étapes d'un procédé de transmission et de déchiffrement d'un programme;
- la figure 3 représente un schéma bloc fonctionnel du terminal de décodage de l'équipement récepteur de la figure 1, selon un exemple de réalisation particulier;
- la figure 4 représente un schéma bloc fonctionnel du module de sécurité de l'équipement récepteur de la figure 1, selon un exemple de réalisation particulier;
- la figure 5A représente schématiquement des flux de données et de messages de contrôle d'accès transmis selon un premier exemple de réalisation,
- la figure 5B représente schématiquement des flux de données et de messages de contrôle d'accès transmis selon un deuxième exemple de réalisation.

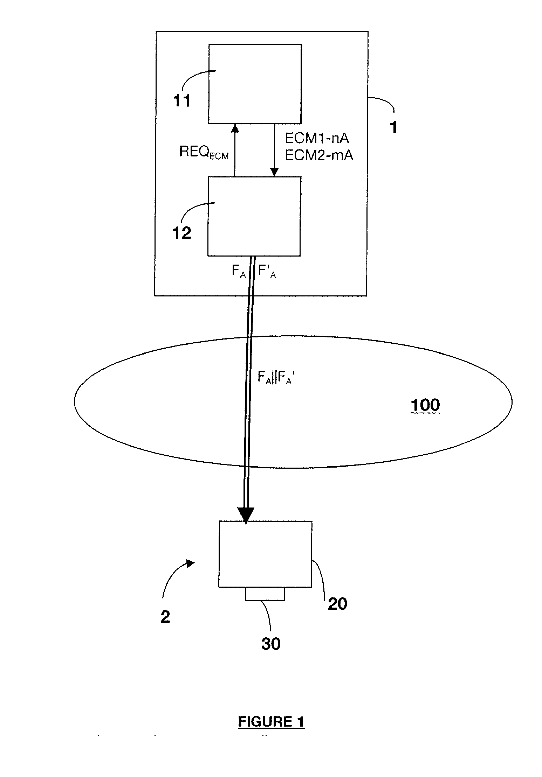

Sur la figure 1, on a représenté un système 1 de transmission de données à travers un réseau, en l'espèce l'Internet 100, vers des équipements récepteurs d'utilisateur 2.

D'emblée, on notera qu'un équipement récepteur d'utilisateur 2 comprend un terminal 20 de déchiffrement et de décodage et un module de sécurité 30, par exemple une carte à puce.

Dans l'exemple particulier décrit ici, le système de transmission 1 est destiné à transmettre des programmes audiovisuels d'un bouquet de chaînes de télévision notées A, B, C, etc.. Pour chaque chaîne de télévision, le système de transmission 1 est adapté pour transmettre de façon synchrone vers des équipements récepteurs 2 :
- un flux F_{A}, F_{B,}.. de données (ici des données audio, vidéo et éventuellement textuelles) relatives à un programme audiovisuel diffusé par la chaîne de télévision et
- un flux F'_{A}, F'₈,... de messages de contrôle d'accès associés à ce flux de données de programme F_{A}, F_{B},....

Le système de transmission 1 comprend un générateur 11 de messages de contrôle d'accès en l'espèce des ECM *(Entitlement Control Messages)* et un multiplexeur 12.

En fonctionnement, pour une chaîne donnée, par exemple la chaîne A, le générateur 11 génère, sur requêtes du multiplexeur 12,
- une succession de premiers messages ECM notés ECM1-nA (avec n entier naturel supérieur ou égal à un) : ECM1-1A, ECM1-2A, etc.
- une succession de deuxièmes messages ECM notés ECM2-mA (avec m entier naturel supérieur ou égal à un) : ECM2-1A, ECM2-2A, etc.

Le multiplexeur 12 est adapté pour émettre un flux F'_{A} contenant une succession de paires de messages ECM, notées {ECMl-nA, ECM2-mA}. Chaque paire de messages ECM contient un premier message ECM1-nA et un deuxième message ECM2-mA.

Dans l'exemple particulier décrit ici, chaque message ECM1-nA contient:
- un ou plusieurs critère(s) d'accès à des données de programme, noté CA,
- une première clé de déchiffrement, ou premier mot de contrôle, noté CW1-nA, sous forme chiffrée,
- un identifiant de mot de contrôle, noté IdCW1-nA.

Dans l'exemple décrit ici, chaque message ECM1-nA est signé, afin de garantir l'intégrité de son contenu.

Dans l'exemple particulier décrit ici, chaque message ECM2-mA contient:
- une deuxième clé de déchiffrement, ou deuxième mot de contrôle, noté CW2-mA, sous forme chiffrée,
- un identifiant de mot de contrôle, noté IdCW2-mA, relatif au mot de contrôle CW2-mA;
- l'identifiant de mot de contrôle IdCW1-nA relatif au mot de contrôle CW1-nA.

Dans l'exemple décrit ici, chaque message ECM2-mA est signé, afin de garantir l'intégrité de son contenu.

Chaque deuxième mot de contrôle CW2-mA est chiffré à l'aide d'un premier mot de contrôle CW1-nA, a une période de validité T2 et est apte à déchiffrer des données de programme.

Chaque mot de contrôle CW1-nA est chiffré à l'aide d'une clé d'exploitation K, connue de l'équipement récepteur destinataire, a une période de validité T1 et est apte à déchiffrer plusieurs deuxièmes mots de contrôle CW2-mA.

La durée T1 de la période de validité d'un mot de contrôle CW1-nA est supérieure à la durée T2 de la période de validité d'un mot de contrôle CW2-mA. En l'espèce, la durée T1 est égale à k fois la durée T2 : T1 = k.T2, k étant un entier naturel. La valeur CW1-nA du premier mot de contrôle change à chaque période T1, autrement dit toutes les k périodes T2 successives, alors que la valeur CW2-mA du deuxième mot de contrôle change à chaque période T2. Ainsi, un mot de contrôle CW1-nA peut déchiffrer k mots de contrôle CW2-mA successifs. La période de validité T1 peut être bien supérieure à la période de validité T2. Par exemple, la période T2 étant de l'ordre de quelques secondes, la période T1 pourrait être de l'ordre de plusieurs minutes, de plusieurs heures, voire de plusieurs jours. La durée de la période T2 est à choisir en fonction notamment de contraintes de sécurité.

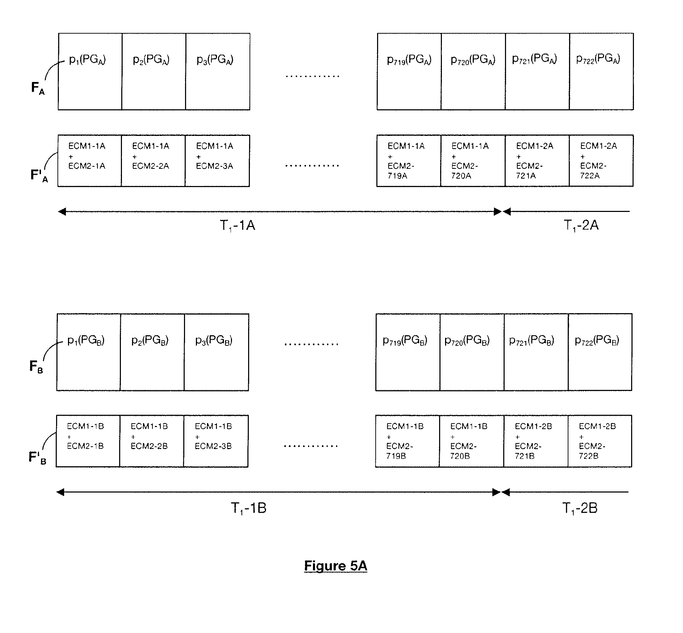

Dans l'exemple particulier décrit ici à titre illustratif en référence à la figure 5A, pour bien faire comprendre l'invention, T2 vaut 10 s et T1 vaut 2 heures Autrement dit, le facteur multiplicatif k vaut ici 720. En référence à la figure 5A, durant la période de validité T1-1A de durée T1, les k (avec ici k=720) mots de contrôle CW2-1A à CW2-720A, présents respectivement dans les k messages ECM2-1A à ECM2-720A successifs, sont chiffrés par le même mot de contrôle CW1-1A, présent dans le message ECM1-lA. Durant la période de validité suivante T1-2A de durée T1, partiellement représentée, les k deuxièmes mots de contrôle CW2-721A à CW2-1440A, présents respectivement dans les k messages ECM2-7A à ECM2-1440A successifs, sont chiffrés par le même mot de contrôle suivant CW1-2A, présent dans le message ECM1-2A.

L'identifiant de mot de contrôle IdCW1-nA, présent dans le premier message ECM1-nA et dans le deuxième message ECM2-mA, permet de faire le lien entre le premier mot de contrôle CW1-nA et le deuxième mot de contrôle CW2-mA chiffré à l'aide de ce premier mot de contrôle CW1-nA, comme cela sera explicité plus loin.

L'identifiant IdCW2-mA, présent dans le deuxième message ECM2-mA, permet de faire le lien entre le deuxième mot de contrôle CW2-mA présent dans ce message ECM2-mA et les données du flux F_{A} destinées à être déchiffrées à l'aide de ce mot de contrôle CW2-mA.

Le générateur 11 reçoit du multiplexeur 12 les premiers mots de contrôle CW1-nA en clair et les deuxièmes mots de contrôle CW2-mA en clair et, à partir de ces mots de contrôle, génère les premiers messages ECM1-nA et les deuxièmes messages ECM2-mA.

En fonctionnement, pour chiffrer et transmettre vers un équipement récepteur destinataire 2 des données de programme, correspondant par exemple à un programme audiovisuel PG_{A} de la chaîne A, le multiplexeur 12 adresse au générateur de messages ECM 11 des requêtes périodiques de messages ECM, notée REQ_{ECM}. Ces requêtes REQ_{ECM} sont ici transmises à la période T2. Elles contiennent des premiers mots de contrôle en clair CW1-nA, le ou les critères CA d'accès aux données de programme à chiffrer et des deuxièmes mots de contrôle CW2-mA. En réponse à ces requêtes, le générateur 11 transmet au multiplexeur 12 une succession de premiers messages ECM1-nA et une succession de deuxièmes messages ECM2-mA. Chaque message ECM2-mA contient un deuxième mot de contrôle CW2-mA, apte à déchiffrer les données du programme PG_{A}, sous forme chiffrée à l'aide d'un premier mot de contrôle CW1-nA. Chaque premier message ECM1-nA contient un premier mot de contrôle CW1-nA, sous forme chiffrée à l'aide d'une clé d'exploitation K connue de l'équipement récepteur destinataire 2, ainsi que le ou les critères CA d'accès aux données du programme PG_{A}.

Le multiplexeur 12 chiffre les données de parties successives Pₘ(PG_{A}) du programme PG_{A} à J'aide des deuxièmes mots de contrôle CW2-mA successifs en clair, respectivement. Il transmet ensuite un flux F_{A} de données du programme PG_{A}, comportant des données de programme (audio, vidéo et texte) chiffrées au moyen des deuxièmes mots de contrôle successifs CW2-mA, et un flux F'_{A} de messages ECM contenant des paires successives de messages {ECM1-nA, ECM2-mA} respectivement associées aux parties successives du programme PG_{A}. Les flux F_{A} et F'_{A} représentés sur la figure 5A sont multiplexés par le multiplexeur 12.

En référence à la figure 5A, le flux F_{A} contient les parties Pm(PG_{A}) du programme PG_{A} et le flux F'_{A} contient les paires successives de messages {ECM1-nA, ECM2-mA}.

Chaque paire de messages {ECM1-nA, ECM2-mA} du flux F'_{A} est associée et transmise concomitamment à la partie Pₘ(PG_{A}) du programme PG_{A}. Elle contient un premier message ECM1-nA et un deuxième message ECM2-mA. Le deuxième message ECM2-mA contient, sous forme chiffrée, un mot de contrôle CW2-mA destiné à déchiffrer les données de cette partie Pm(PG_{A}) de programme, alors que le premier message ECM1-nA contient, sous forme chiffrée, un mot de contrôle CW1-nA destiné à déchiffrer le mot de contrôle CW2-mA. Comme cela sera explicité dans la suite de la description, le premier message ECM1-nA est destiné à être traité par le module de sécurité 30 de l'équipement récepteur 2, alors que le deuxième message ECM2-mA est destiné à être traité par le terminal de décodage 20 de l'équipement récepteur 2.

Le multiplexeur 12 multiplexe le flux F_{A} de données de programme PG_{A} et le flux F'_{A} de paires de messages de contrôle d'accès correspondant {ECM1-nA, ECM2-mA} et transmet le flux multiplexé, noté F_{A}||F_{A'}, vers un équipement récepteur destinataire 2. Le flux de données de contenus F_{A} et le flux de messages ECM F'_{A} sont transmis vers l'équipement récepteur 2 de façon synchrone et concomitante. Cela signifie que chacun des deuxièmes messages ECM2-mA véhiculant un mot de contrôle CW2-mA apte à déchiffrer des données d'une partie Pₘ(PG_{A}) du programme PG_{A} est transmis concomitamment à la transmission de cette partie de programme Pm(PG_{A}). En outre, chaque message ECM2-mA contenant un mot de contrôle CW2-mA est transmis avec le message ECM1-nA contenant le mot de contrôle CW1-nA apte à déchiffrer ce mot de contrôle CW2-mA.

Dans l'exemple de réalisation décrit ici, une même paire de messages {ECM1-nA, ECM2-mA} est transmise plusieurs fois, de façon répétée, durant la période de validité T2 du message ECM2-mA.

Sur la figure 5A, on a également représenté un flux F_{B} de données de programme de la chaîne B et un flux F'_{B} de données de paires de messages {ECM1-nB, ECM2-mB} correspondant.

Il est ici rappelé qu'un équipement récepteur d'utilisateur 2 comprend un terminal de déchiffrement et de décodage 20, ou décodeur, et un module de sécurité 30, en l'espèce une carte à puce. Le module de sécurité 30 mémorise des droits d'utilisateur ainsi qu'une clé d'exploitation K. Ces droits d'utilisateur et cette clé d'exploitation K ont été inscrits, mémorisés, dans la carte 30 suite à la réception par l'équipement 2 d'un ou de plusieurs messages de gestion, en l'espèce des EMMs *(Entitlement Management Message),* de façon connue. La clé d'exploitation K permet de déchiffrer des mots de contrôle CW1-nA présents dans des premiers messages de contrôle d'accès ECM1-nA reçus.

Dans l'exemple particulier décrit ici, donné à titre illustratif uniquement, on considère la transmission d'un programme audiovisuel PG_{A} de la chaîne A par le système 1 vers l'équipement récepteur 2. On suppose que le module de sécurité 30 de l'équipement 2 mémorise des droits suffisants pour accéder au programme PG_{A}.

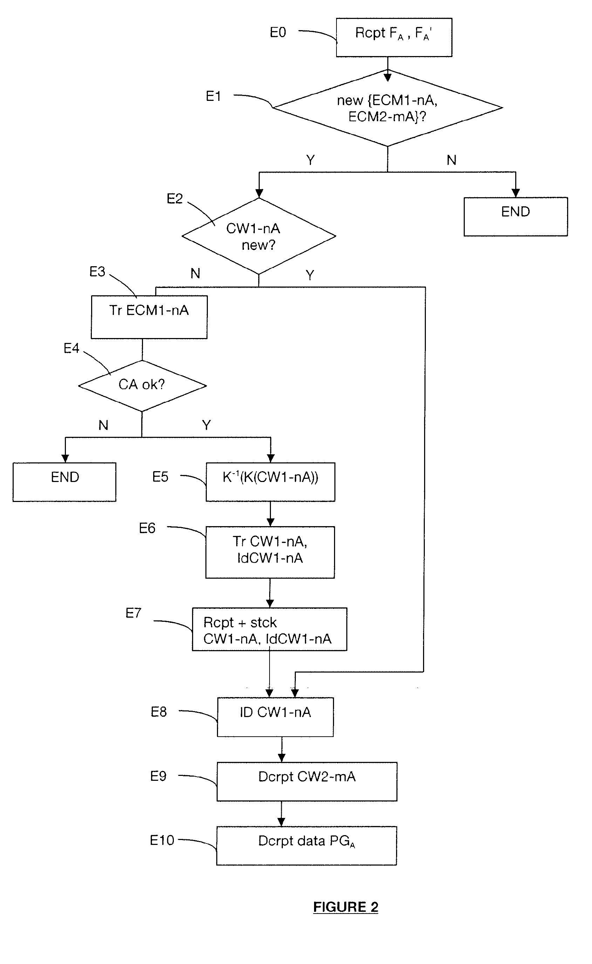

En référence à la figure 2, on va maintenant décrire la transmission du programme PG_{A} vers l'équipement récepteur 2 et le déchiffrement du programme PG_{A} par l'équipement 2, selon un exemple particulier de réalisation. Le programme PG_{A} est décomposé en une succession de parties Pm(PG_{A}), chaque partie ayant par exemple une durée de 10s.

Pour la transmission du programme PG_{A}, le système de transmission 1 transmet de façon synchrone un flux F_{A} de données de programme, comprenant les données multimédia (audio, vidéo et/ou texte) du programme PG_{A}, et un flux F'_{A} contenant une succession de paires de messages de contrôle d'accès {ECM1-nA, ECM2-mA} se rapportant aux données de programme. Les parties successives Pm(PG_{A}) du programme PG_{A} sont chiffrées à l'aide de mots de contrôle CW2-mA successifs, respectivement.

Comme précédemment explicité, les paires successives de messages {ECM1-nA, ECM2-mA} du flux F'_{A} contiennent chacune un premier message de contrôle d'accès ECM1-nA et un deuxième message de contrôle d'accès ECM2-mA.

Le premier message ECM1-nA contient ici :
- un critère CA d'accès aux données du programme PG_{A} auquel le message ECM1-nA se rapporte;
- un mot de contrôle CW1-nA, sous forme chiffrée à l'aide de la clé d'exploitation K;
- un identifiant du mot de contrôle CW1-nA, noté IdCW1-nA.

Le deuxième message ECM2-mA contient ici
- un deuxième mot de contrôle CW2-mA, sous forme chiffrée à l'aide du premier mot de contrôle CW1-nA de la paire de messages {ECM1-nA, ECM2-mA};
- un identifiant du deuxième mot de contrôle IdCW2-mA et
- un identifiant du premier mot de contrôle IdCW1-nA.

Ce deuxième mot de contrôle CW2-mA est destiné à déchiffrer les données d'une partie Pₘ(PG_{A}) du programme PG_{A}.

On rappelle ici que la période de validité de chacun des premiers mots de contrôle successifs CW1-nA est T1 et la période de validité de chacun des deuxièmes mots de contrôle successifs CW2-mA est T2, la durée T1 étant égale à k fois la durée T2. Il en résulte que le deuxième message ECM2-mA change à chaque période de validité de durée T2, alors que le premier message ECM1-nA change à chaque période de durée T1 (autrement dit toutes les k périodes de durée Tl).

En outre, dans l'exemple particulier décrit ici, durant chaque période de validité de durée T2 d'une paire de messages {ECM1-nA, ECM2-mA}, cette paire de messages {ECM1-nA, ECM2-mA} est répétée plusieurs fois dans le flux F'_{A}.

En réception, lors d'une étape E0 (voir figure 2), le terminal de décodage 20 reçoit le flux F_{A} de données du programme PG_{A} et, parallèlement, le flux F'_{A} de messages de contrôle d'accès se rapportant aux données du programme PG_{A}.

A la réception de chaque paire de messages {ECM1-nA, ECM2-mA}, le terminal 20 détermine s'il s'agit d'une nouvelle paire de messages (autrement dit si l'un au moins des deux messages ECM1-nA et ECM2-mA est nouveau), lors d'une étape de test E1. Ce test E1 est réalisé par le terminal 20 par comparaison, d'une part, de l'identifiant IDCW1-nA du mot de contrôle chiffré CW1-nA présent dans le premier message ECM1-nA avec l'identifiant IDCW1-(n-1)A du mot de contrôle chiffré CW1-(n-l)A présent dans le précédent premier message ECM1-(n-1)A et par comparaison, d'autre part, de l'identifiant IdCW2-mA du mot de contrôle chiffré CW2-mA présent dans le deuxième message ECM2-mA avec l'identifiant du mot de contrôle chiffré CW2-(m-l)A présent dans le précédent deuxième message reçu ECM2-(m-1)A.

Si le test E1 est négatif (branche "N" suite à l'étape E1), autrement dit si la paire de messages {ECM1-nA, ECM2-mA} a déjà été préalablement reçue par le terminal 20, le terminal 20 interrompt le traitement de cette paire de messages {ECM1-nA, ECM2-mA}, lors d'une étape notée "END".

Si le test E1 est positif (branche "Y" suite à l'étape E1), autrement dit si la paire de messages {ECM1-nA, ECM2-mA} n'a pas déjà été reçue par le terminal 20, l'étape E1 est suivie d'une étape E2.

Lors de l'étape E2, le terminal 20 analyse le premier message ECM1-nA de la paire de messages reçue et vérifie s'il possède déjà en mémoire le mot de contrôle CW1-nA présent dans ce message ECM1-nA, à l'aide de l'identifiant de mot de contrôle IdCW1-nA.

Si le test E2 est négatif (branche "N" suite à l'étape E2), autrement dit si le terminal 20 ne possède pas déjà en mémoire le mot de contrôle CW1-nA, le premier message ECM1-nA est transmis au module de sécurité 30 pour traitement, lors d'une étape E3.

L'étape E3 est suivie d'une étape E4 lors de laquelle le critère d'accès CA présent dans le message ECM1-nA est vérifié. Cette vérification consiste ici à déterminer, après vérification de la signature du message ECM1-nA, si le critère CA est satisfait par les droits d'utilisateur mémorisés dans le module de sécurité 30. Le module de sécurité 30 ayant en mémoire des droits suffisants pour accéder au programme PG_{A}, il est déterminé par ce module 30 que le critère d'accès CA est satisfait par les droits d'utilisateur mémorisés (branche "Y" suite à l'étape E4). Le procédé passe alors à une étape E5 de déchiffrement lors de laquelle le module 30 déchiffre le mot de contrôle CW1-nA à l'aide de la clé d'exploitation K mémorisée dans le module de sécurité.

Dans le cas où le critère d'accès CA ne serait pas satisfait (branche "N" suite à l'étape E4), le traitement du message ECM1-nA serait interrompu (étape notée "END"), sans déchiffrement du mot de contrôle CW1-nA.

L'étape E5 de déchiffrement du mot de contrôle CW1-nA par le module de sécurité 30 à l'aide de la clé d'exploitation K est suivie d'une étape E6 de transmission du mot de contrôle CW1-nA et de l'identifiant IdCW1-nA de ce mot de contrôle par le module de sécurité 30 au terminal 20. Cette transmission entre le module de sécurité 30 et le terminal 20 est ici sécurisée par chiffrement à l'aide d'une clé secrète δ commune au module 30 et au terminal 20. Après déchiffrement par le module de sécurité 30 à l'aide de la clé K, le mot de contrôle CW1-nA est chiffré à l'aide de la clé δ par le module de sécurité 30 puis transmis au terminal 20.

Lors d'une étape E7, le terminal 20 reçoit le mot de contrôle CW1-nA transmis de façon sécurisée, le déchiffre à l'aide de la clé δ.puis le stocke dans une mémoire sécurisée. L'identifiant de mot de contrôle correspondant IdCW1-nA reçu avec le mot de contrôle CW1-nA est également stocké en mémoire. L'étape E7 est suivie d'étapes E8 et E9, explicités plus loin.

Par souci de clarté, les étapes de chiffrement et de déchiffrement du mot de contrôle CW1-nA à l'aide la clé δ, permettant de sécuriser la transmission E7 entre le module de sécurité 30 et le terminal 20, ne sont pas représentées sur la figure 2.

Si le test E2 est positif (branche "Y" sur la figure), autrement dit si le terminal 20 possède déjà en mémoire le mot de contrôle CW1-nA en clair, le premier message ECM1-nA n'est pas retransmis au module de sécurité 30 pour traitement et l'étape E3 est directement suivie des étapes E8 et E9 de traitement du deuxième message ECM2-mA de la paire de messages reçus {ECM1-nA, ECM2-mA}.

Les étapes E8 et E9 correspondent au traitement du deuxième message ECM2-mA par le terminal 20. Il est rappelé que le message ECM2-mA contient le mot de contrôle CW2-mA, sous forme chiffrée, l'identifiant IdCW2-mA et l'identifiant IdCW1-nA.

Lors de l'étape E8, après vérification de la signature du message ECM2-mA, le terminal 20 compare l'identifiant IdCW1-nA présent dans le message ECM2-mA avec celui ou ceux mémorisés par le terminal 20 dans sa mémoire sécurisée, afin d'identifier le mot de contrôle utilisé pour chiffrer le mot de contrôle CW2-mA contenu dans le message ECM2-mA. Le terminal 20 détermine ainsi que le mot de contrôle CW1-nA mémorisé par le terminal 20 à l'étape E7 est apte à déchiffrer le mot de contrôle CW2-mA présent dans le message ECM2-mA.

Lors de l'étape E9, le terminal 20 déchiffre le deuxième mot de contrôle CW2-mA à l'aide du premier mot de contrôle CW1-nA en clair récupéré dans la mémoire sécurisée du terminal 20.

Puis, lors d'une étape E10, à l'aide de l'identifiant de mot de contrôle IdCW2-mA, le terminal 20 fait le lien entre le mot de contrôle CW2-mA déchiffré et les données correspondantes du programme PG_{A}, c'est-à-dire les données de la partie de programme Pm(PG_{A}) ayant été chiffrée avec ce mot de contrôle CW2-mA.

On soulignera que, lorsque le terminal 20 possède déjà en mémoire le premier mot de contrôle CW1-nA en clair, le traitement du deuxième message ECM2-mA est réalisé directement par le terminal 20, dès la réception de la paire de messages {ECM1-nA, ECM2-mA}, sans faire appel au module de sécurité 30. Grâce à cela, le déchiffrement des données de programme est peu consommateur en temps.

Les étapes précédemment décrites sont réitérées à la réception de chaque paire de messages {ECM1-nA, ECM2-mA}.

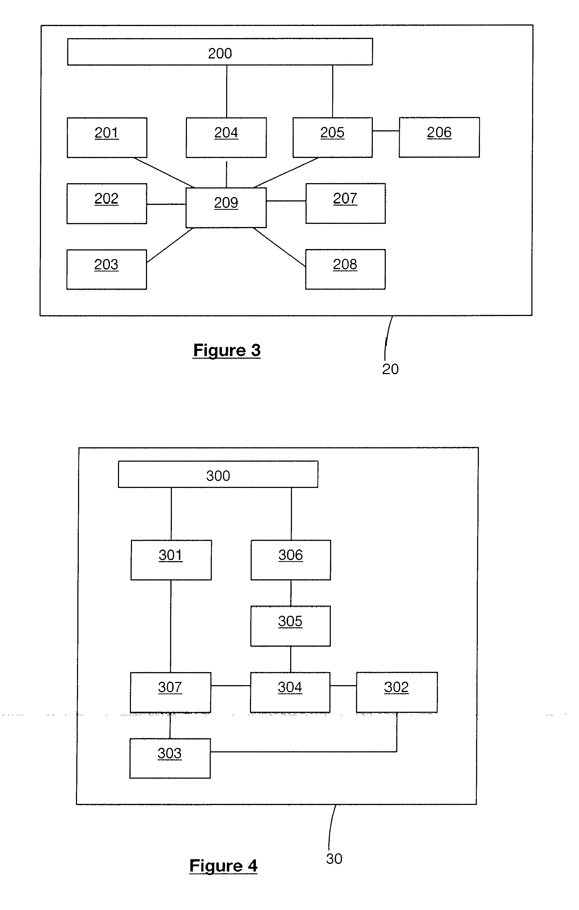

En référence à la figure 4, on va maintenant décrire le module de sécurité 30, selon un exemple de réalisation particulier de l'invention. D'emblée, on notera que seuls les éléments de la carte 30 nécessaires à la compréhension de l'invention sont décrits ici.

Le module de sécurité 30 comprend :
- une interface 300 de connexion avec un terminal de décodage externe;
- un module de réception 301;
- une mémoire de stockage 302;
- un module 303 de traitement des messages de gestion EMM;
- un module 304 de vérification des critères d'accès présents dans les messages de contrôle d'accès ECM;
- un module 305 de déchiffrement des mots de contrôle présents dans les messages de contrôle d'accès ECM;
- un module 306 de transmission de mots de contrôle vers un terminal de décodage externe.

Le module de réception 301, relié à l'interface de connexion 300, est agencé pour recevoir des messages transmis par le terminal de décodage, ici le terminal 20, auquel est connectée la carte 30. Ces messages comprennent des messages ECM de contrôle d'accès à un contenu ainsi que des messages de gestion EMM.

La mémoire de stockage 302 mémorise des droits d'utilisateur et une clé d'exploitation K permettant le déchiffrement de mots de contrôle, toutes ces données (droits d'utilisateur et clé K) étant ici fournies à la carte dans des messages EMM.

Le module 303 de traitement de messages EMM est agencé pour traiter, de façon connue, les messages EMM reçus et retransmis à la carte 30 par le terminal de décodage 20.

Le module 304 de vérification de critères d'accès est agencé pour vérifier si le ou les critères d'accès présents dans un message ECM sont satisfaits par les droits d'utilisateur mémorisés dans la mémoire 302. Le module 304 est ainsi adapté pour mettre en oeuvre l'étape E4 précédemment décrite.

Le module de déchiffrement 305 est agencé pour déchiffrer des mots de contrôle contenus dans des messages ECM, si le ou les critères d'accès présent(s) dans ces ECM sont satisfaits par les droits d'utilisateur mémorisés dans la mémoire 302. Ce module 306 est ainsi agencé pour mettre en oeuvre l'étape E5 précédemment décrite.

Le module de transmission 306, relié à l'interface de connexion 300, est agencé pour chiffrer les mots de contrôle en clair à l'aide de la clé secrète δ puis transmettre au terminal de décodage 20 auquel est connecté le module de sécurité 30 des mots de contrôle chiffrés à l'aide de cette clé δ. Ce module 306 est ainsi adapté pour mettre en oeuvre l'étape E6 précédemment décrite.

En outre, la carte 30 comprend un module de commande 307, auquel tous les éléments de la carte 30 sont reliés et destiné à en contrôler le fonctionnement.

Les modules 303-305 comprennent des instructions logicielles pour faire exécuter les étapes de procédé correspondantes par la carte 30 lorsque ces instructions sont exécutées par un processeur.

En référence à la figure 3, on va maintenant décrire le terminal 20 de déchiffrement et de décodage, selon un exemple de réalisation particulier de l'invention. D'emblée, on notera que seuls les éléments du terminal 20 nécessaires à la compréhension de l'invention sont décrits ici.

Le terminal de déchiffrement et de décodage 20 comprend :
- une interface 200 de connexion à un module de sécurité externe, ici le module 30;
- un module 201 de réception d'un flux multiplexé composé d'un flux de données multimédia et d'un flux de messages de contrôle d'accès;
- des premier et deuxième modules de test 202, 203;
- un module 204 de transmission de messages ECM au module de sécurité externe;
- un module 205 de réception de mots de contrôle en provenance du module de sécurité externe;
- une mémoire sécurisée 206 de stockage de mots de contrôle reçus en provenance du module de sécurité;
- un premier module de déchiffrement 207;
- un deuxième module de déchiffrement 208.

Le premier module de test 202 est agencé pour vérifier, à la réception d'une paire de messages comprenant des premier et deuxième messages ECM, s'il s'agit d'une nouvelle paire de messages ECM ou d'une paire de messages ECM déjà reçue précédemment. Le module de test 202 est adapté pour mettre en oeuvre l'étape de test E1 précédemment décrite.

Le deuxième module de test 203 est adapté pour vérifier si le mot de contrôle présent sous forme chiffrée dans le premier message ECM1 d'une paire de messages ECM reçue est déjà en mémoire dans le terminal 20. Ce module 203 est agencé pour mettre en oeuvre l'étape E3 précédemment décrite.

Le module de transmission 204 est agencé pour transmettre au module de sécurité externe le premier message ECM1 d'une paire de messages ECM reçue, dans le cas où le mot de contrôle présent sous forme chiffrée dans ce premier message ECM1 n'est pas déjà en mémoire dans le terminal 20. Le module 204 est agencé pour mettre en oeuvre l'étape E3 précédemment décrite.

Le module de réception 205 est agencé pour recevoir les mots de contrôle CW1 chiffrés à l'aide de la clé δ en provenance du module de sécurité externe, déchiffrer ces mots de contrôle à l'aide de la clé δ puis les stocker dans la mémoire 206. Le module 205 est adapté pour mettre en oeuvre l'étape E7 précédemment décrite.

La mémoire 206 est une mémoire sécurisée. Elle est adaptée pour être effacée à chaque fois que le terminal 20 est éteint.

Le premier module de déchiffrement 207 est adapté pour déchiffrer des mots de contrôle présents dans des deuxièmes messages de contrôle d'accès reçus dans des paires de messages ECM, à l'aide de mots de contrôle reçus en provenance du module de sécurité et stockés dans la mémoire 206.

Le deuxième module de déchiffrement 208 est adapté pour déchiffrer des données multimédia du flux F à l'aide de mots de contrôle déchiffrés par le premier module de déchiffrement 207.

Ces deux modules 207 et 208 sont adaptés pour mettre en oeuvre les étapes E9 et E10 respectivement.

On notera que les modules 201-205 et 207-208 comprennent des instructions logicielles pour commander l'exécution les étapes du procédé précédemment décrit, lorsque ces instructions sont exécutées par un processeur.

Dans le mode de réalisation qui vient d'être décrit, le système 1 transmet un flux F' de messages ECM par chaîne TV et ce flux transporte des paires de messages {ECM1-nA, ECM2-mA}.

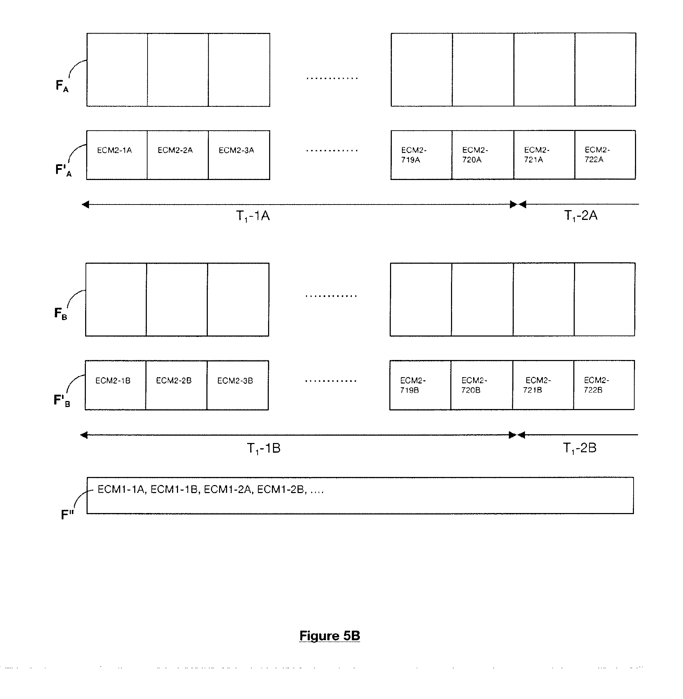

Dans un autre exemple de réalisation, en référence à la figure 5B, les premiers messages ECM1 (ECM1-nA, ECM1-nB, ... ) destinés au module de sécurité 30 d'un équipement récepteur destinataire 2 sont regroupés dans un même flux, noté F", commun à une pluralité de chaînes, ici toutes les chaînes A, B, C, ... du bouquet. Dans ce cas, pour la chaîne A par exemple, le système 1 transmet un flux F_{A} de données chiffrées, un flux F'_{A} comprenant une succession de deuxièmes messages exclusivement, chaque deuxième message étant reçu de façon synchrone avec les données ayant été chiffrées avec la deuxième clé présente dans ledit deuxième message, et un flux F" contenant une pluralité de premiers messages relatifs ici aux différents flux de données des différentes chaînes du bouquet A, B, C, ....

Ces premiers messages ECM1 peuvent ainsi être transmis en avance par rapport à la transmission des deuxièmes messages ECM2 (ECM2-mA, ECM2-mB, ...) contenant les mots de contrôle CW2 chiffrés à l'aide des mots de contrôle CW1 (CW1-nA, CW1-nB, ...) et répétés dans le flux.

Dans ce cas, pour une chaîne donnée, par exemple la chaîne A, le terminal 20 reçoit le flux F_{A} de données chiffrées, le flux F'_{A} contenant une succession de deuxièmes messages, chaque deuxième message étant reçu de façon synchrone avec les données du flux F_{A} ayant été chiffrées avec la deuxième clé présente dans ce deuxième message, et un flux F" contenant plusieurs premiers messages relatifs à plusieurs de flux distincts de données chiffrées re+atifs aux différentes chaînes A, B, C, ... du bouquet.

Le terminal 20 peut ainsi analyser le flux commun F" en tâche de fond afin de mettre à jour dans sa mémoire les mots de contrôle CW1 valides pour l'ensemble des chaînes A, B, C, .... Grâce à cela, en cas de zapping (c'est-à-dire de changement de chaîne), le terminal 20 possède déjà en mémoire le mot de contrôle CW1 en cours de validité pour la nouvelle chaîne. Les messages ECM2 (ECM2-mA, ECM2-mB, ...) relatifs à chaque chaîne A, B, C, ... sont transmis dans des flux respectifs F'_{A,} F'_{B}, F'_{c}, ..., de façon concomitante et synchrone avec la transmission des flux de données de programme F_{A}, F_{B}, F_{c},....

Par rapport au premier exemple de réalisation, ce deuxième exemple de réalisation présente l'avantage d'éviter de surcharger la bande passante disponible pour la transmission des flux F'_{A}, F'_{B}, F'_{c}, ...de messages ECM des différentes chaînes. En outre, il donne la possibilité de calculer en avance les premiers mots de contrôle CW1, ce qui en cas de zapping permet d'accélérer le temps de déchiffrement des deuxièmes mots de contrôle.

Dans la description qui précède, le ou les critères d'accès aux données sont contenus dans les premiers messages ECM1 destinés au module de sécurité 30 de l'équipement destinataire 2. En variante, on pourrait prévoir de distinguer deux types de critères d'accès, ou d'utilisation: les critères de type module de sécurité et les critères de type terminal. Les critères de type module de sécurité sont insérés dans les messages ECM1 destinés au module de sécurité, alors que les critères de type terminal sont insérés dans les messages ECM2 destinés au terminal. A titre d'exemple illustratif :
- les critères de type module de sécurité peuvent comprendre des critères d'abonnement ou de débit de jetons pré-payés, et
- les critères de type terminal peuvent comprendre une liste noire de décodeurs révoqués, une commande d'activation d'une protection anti-copie, une indication précisant si l'enregistrement des données est autorisé ou non, etc.

## Revendications

1. Procédé de déchiffrement de données chiffrées par un équipement d'utilisateur comportant un terminal de déchiffrement (20) connecté à un module de sécurité (30), dans lequel
- le terminal (20) reçoit (E0) un premier message de contrôle d'accès (ECM1-nA) contenant une première clé (CW1-nA) sous forme chiffrée et une pluralité de deuxièmes messages de contrôle d'accès (ECM2-mA) contenant respectivement une pluralité de deuxièmes clés (CW2-mA) sous forme chiffrée;
- le terminal (20) retransmet ledit premier message de contrôle d'accès (ECM1-nA) au module de sécurité (30);
- le module de sécurité (30) déchiffre (E5) la première clé (CW1-nA) présente dans le premier message de contrôle d'accès (ECM1-nA) puis la transmet au terminal (20),
- pour chacun desdits deuxièmes messages (ECM2-mA), le terminal (20) déchiffre (E9) la deuxième clé (CW2-mA) présente dans ce deuxième message (ECM2-mA) à l'aide de la première clé reçue (CW1-nA),
- le terminal (20) déchiffre (E10) lesdites données chiffrées à l'aide des dites deuxièmes clés.

2. Procédé selon la revendication 1, dans lequel, un deuxième message de contrôle d'accès (ECM2-mA) contenant au moins un critère d'accès aux données, le terminal (20) vérifie ledit critère d'accès présent dans le deuxième message (ECM2-mA) et ne déchiffre la deuxième clé (CW2-mA) que si le critère d'accès présent dans ledit deuxième message (ECM2-mA) est satisfait.

3. Procédé selon la revendication 1, dans lequel, le premier message de contrôle d'accès (ECM1-nA) contenant au moins un critère d'accès aux données, le module de sécurité (30) vérifie ledit critère d'accès présent dans le premier message (ECM1-nA) et ne déchiffre la première clé (CW1-nA) que si le critère d'accès présent dans le premier message (ECM1-nA) est satisfait.

4. Procédé selon la revendication 1, dans lequel le terminal (20) reçoit un flux de données chiffrées (F_{A}) et un flux de messages (F_{A}') comprenant une succession de paires de messages (ECM1-nA, ECM2-mA), chaque paire (ECM1-nA, ECM2-mA) comprenant le premier message de contrôle d'accès (ECM1-nA) et un deuxième message de contrôle d'accès (ECM2-mA) et étant reçue de façon synchrone avec les données ayant été chiffrées avec la deuxième clé (CW2-nA) présente dans ledit deuxième message (ECM2-mA).

5. Procédé selon la revendication 1, dans lequel le terminal (20) reçoit un flux de données chiffrées (F_{A}), un flux (FA') comprenant une succession de deuxièmes messages, chaque deuxième message étant reçu de façon synchrone avec les données ayant été chiffrées avec la deuxième clé (CW2-nA) présente dans ledit deuxième message (ECM2-mA), et un flux (F") contenant une pluralité de premiers messages (ECM1-nA) relatifs à une pluralité de flux de données chiffrées distincts (F_{A}, F_{B}, ...).

6. Procédé de transmission de données chiffrées par un système de transmission vers un équipement récepteur comportant un terminal de déchiffrement (20) et un module de sécurité (30), dans lequel le système transmet au terminal (20) lesdites données chiffrées, un premier message de contrôle d'accès (ECM1-nA) contenant une première clé (CW1-nA) sous forme chiffrée et destiné à être retransmis au module de sécurité (30), et une pluralité de deuxièmes messages de contrôle d'accès (ECM2-mA) contenant respectivement une pluralité de deuxièmes clés (CW2-mA) sous forme chiffrée, la première clé (CW1-nA) étant chiffrée à l'aide d'une clé mémorisée (K) par le module de sécurité (30) et destinée à être déchiffrée par le module de sécurité (30) et les deuxièmes clés (CW2-mA) étant chiffrées à l'aide de ladite première clé (CW1-nA) et destinées à être déchiffrées par le terminal (20).

7. Procédé selon la revendication 6, dans lequel le système transmet un flux de données chiffrées (F_{A}) et un flux de messages contenant une succession de paires de messages, chaque paire comprenant le premier message de contrôle d'accès et un deuxième message de contrôle d'accès et étant reçue de façon synchrone avec les données ayant été chiffrées avec la clé présente dans ledit deuxième message.

8. Procédé selon la revendication 6, dans lequel le système transmet un flux de données chiffrées (F_{A}), un flux (F'_{A}) comprenant une succession de deuxièmes messages, chaque deuxième message étant reçu de façon synchrone avec les données ayant été chiffrées avec la deuxième clé présente dans ledit deuxième message, et un flux (F") contenant une pluralité de premiers messages relatifs à une pluralité de flux de données chiffrées distincts.

9. Terminal de déchiffrement de données chiffrées comprenant
- des premiers moyens de réception, adaptés pour recevoir un premier message de contrôle d'accès contenant une première clé sous forme chiffrée et un deuxième message de contrôle d'accès contenant une deuxième clé sous forme chiffrée
- des moyens pour retransmettre ledit premier message de contrôle d'accès à un module de sécurité externe, connecté au terminal, pour un déchiffrement de la première clé,
- des deuxièmes moyens de réception, adaptés pour recevoir la première clé, après déchiffrement par le module de sécurité, en provenance dudit module de sécurité,
- des premiers moyens de déchiffrement, adaptés pour déchiffrer la deuxième clé présente dans le deuxième message à l'aide de la première clé reçue,
- des deuxièmes moyens de déchiffrement, adaptés pour déchiffrer des données chiffrées à l'aide de la deuxième clé.

10. Equipement comprenant le terminal selon la revendication 9 et un module de sécurité connecté au terminal, dans lequel le module de sécurité comprend des moyens de réception, adaptés pour recevoir le premier message de contrôle d'accès transmis par le terminal, des moyens de déchiffrement adaptés pour déchiffrer la première clé présente dans le premier message de contrôle d'accès, des moyens de transmission adaptés pour transmettre la première clé au terminal.

11. Système de transmission de données chiffrées à destination d'un équipement récepteur comportant un terminal de déchiffrement et un module de sécurité, comprenant des moyens (10-12) pour transmettre des données chiffrées, un premier message de contrôle d'accès aux dites données contenant une première clé sous forme chiffrée et une pluralité de deuxièmes messages de contrôle d'accès contenant respectivement une pluralité de deuxièmes clés sous forme chiffrée, la première clé étant chiffrée à l'aide d'une clé mémorisée par le module de sécurité et les deuxièmes clés étant chiffrées à l'aide de ladite première clé.
